# EUROPÄISCHE PATENTSCHRIFT

(11) **EP 1 060 969 B1**
(45) Veröffentlichungstag und Bekanntmachung des Hinweises auf die Patenterteilung: **20.08.2003**
(21) Anmeldenummer: 00111441.2
(22) Anmeldetag: 27.05.2000
(51) Int. Cl.: B61D 13/00, B60L 9/30

(54) **Modulares, mehrteiliges Zweisystem-Schienenfahrzeug**
Modular two-system railway vehicle
Véhicule ferroviaire bi-systémique à construction modulaire

(30) Priorität: 14.06.1999 DE 19926940
(43) Veröffentlichungstag der Anmeldung: 20.12.2000
(73) Patentinhaber: ALSTOM LHB GmbH, 38239 Salzgitter (DE)
(72) Erfinder: Müller-Bonder, Guido, Dipl.-Ing., 31141 Hildesheim (DE); Werner, Lothar, Dipl.-Ing., 38302 Wolfenbüttel (DE); Frixen, Andreas, Dipl.-Ing., 38118 Braunschweig (DE)

(56) Entgegenhaltungen:
- EP-A- 0 633 173
- ALBRECHT B ET AL: "ZWEISYSTEM-NIEDERFLUR-STADTBAHNWAGEN SAARBRUECKEN" ZEITSCHRIFT FUR EISENBAHNWESEN UND VERKEHRSTECHNIK. DIE EISENBAHNTECHNIK + GLASERS ANNALEN,DE,GEORG SIEMENS VERLAGSBUCHHANDLUNG. BERLIN, Bd. 122, Nr. 9/10, 1. September 1998 (1998-09-01), XP000781630 ISSN: 0941-0589
- ETHZ H H: "COMBINO, DIE MODULIERBARE NIEDERFLURSTRASSENBAHN DER SIEMENS VERKEHRSTECHNIK" VERKEHR UND TECHNIK,DE,ERIC SCHMIDT VERLAG, BIELEFELD, 1996, Seiten 387-389,390-39, XP000199417 ISSN: 0340-4536

## Beschreibung

Die Erfindung betrifft ein modulares, mehrteiliges Mehrsystem-Schienenfahrzeug, insbesondere ein Zweisystem-Schienenfahrzeug nach dem Oberbegriff des Anspruchs 1.

Zweisystem-Fahrzeuge, bei denen die Energie zum Betrieb des Fahrzeuges wahlweise aus mindestens zwei unterschiedlichen Energieversorgungssystemen gewonnen wird, sind in verschiedenen Arten bekannt. Es sind Fahrzeuge bekannt, die ihre Energie aus zwei unterschiedlichen Stromsystemen (z.B. 750 V DC/15 kV AC) beziehen. Es sind auch Fahrzeuge bekannt, die ihre Energie aus einem Stromsystem und aus einer Dieselmotorgeneratoreinheit beziehen. Weiter sind Fahrzeuge bekannt, die ihre Energie aus einem Stromsystem und aus Akkumulatoren beziehen. Weitere Kombinationen sind denkbar (z.B. mit Brennstoffzellen oder magnetdynamischen Speichern).

Dabei besitzen Zweisystem-Fahrzeuge meist ein Grundenergieversorgungssystem (in der Regel eine Gleichstromenergieversorgung) und mindestens ein zweites System, das seine Energie in das Grundsystem einspeist.

Aus der Druckschrift "ZEV + DET Glas. Ann. 122 (1998) 9/10, Seite 498 bis 509" ist ein Zweisystem-Niederflur-Stadtbahnwagen Saarbrücken bekannt, das modular aufgebaut und dreiteilig ausgebildet ist. Die elektrische Ausrüstung ist auf dem Wagendach, im Fahrerstand sowie in den Vouten und Gerätekasten im Wageninneren untergebracht. Der Mittelwagen ist mit der Hachspannungsausrüstung ausgestattet. Die Endwagen sind niederflurig ausgelegt, wodurch größere Teile der Komponenten der Leistungselektronik auf den Dächern angeordnet werden mussten. Nur die Leistungselektronik für das zweite Energieversorgungssystem, die 15 KV-Anlage, wurde unterflurig unter den Mittelwagen installiert. Dieses Zweisystemfahrzeug ist trotz modularen Aufbaus nur für eine bestimmte Zweisystemkonfiguration (Versorgungsspannungen von 750 V DC und 15KV AC) vorgesehen. Lösungen zur Anpassung des vorliegenden Fahrzeugverbundes an ein anderes zweites Energieversorgungssystem bei geringem Aufwand sind nicht beschrieben und nicht vorgesehen. Insoweit Varianten eines Zweisystemfahrzeuges mit 25 KV Wechselspannung oder mit Dieselhybridantrieb angesprochen werden handelt es sich um neue eigenständige Konstruktionen.

In der Zeitschrift "Nahverkehrspraxis Nr. 11-1997, S. 28" wird ein in Zweisystem-Technik ausgeführter Gelenktriebzug beschrieben, der sowohl auf innerstädtischen Gleisen unter 750 V Gleichspannung wie auch auf den Gleisen der Deutschen Bahn unter 15 kV 16 2/3 Hz Wechselspannung laufen kann. Die 15-kV-Zusatzausrüstung befindet sich auf dem Dach und unter dem Wagenfußboden des Mittelwagens. Der modular aufgebaute Gelenkwagentyp ist für den späteren Einbau eines weiteren mittleren Gelenkwägelchens und Fahrgastmoduls vorbereitet, jedoch ist dieses und andere bekannte Zweisystem-Fahrzeuge nur für eine bestimmte Zweisystem-Kombination vorgesehen.

Ein anderes modulares Konzept für einen Einsystem-Gelenktriebwagen (Medienmitteilung der Fa. STADLER vom 15.05.1996) zeigt den Einsatz einer kompakten Traktionseinheit in der Mitte des Gelenktriebwagens. Dieser Wagenteil kann für Reparaturzwecke oder zur Umstellung auf ein anderes Grundsystem einfach gewechselt werden. Dieses Fahrzeug ist jedoch prinzipiell ein Einsystem-Fahrzeug, dessen Energieversorgungswagenteil zudem nicht für die Transportaufgabe des Fahrzeugs genutzt werden kann.

Der Erfindung liegt die Aufgabe zugrunde, ein modulares, mehrteiliges Mehrsystem-Schienenfahrzeug, insbesondere ein Zweisystem-Fahrzeug, so zu gestalten, daß es unter Beibehaltung eines Grundenergieversorgungssystems mit geringem Aufwand mit unterschiedlichen Energieversorgungssystemen, insbesondere einem zweiten Energieversorgungssystem ausgestattet werden kann, wobei Einschränkungen bei der Nutzung der Fahrzeugteile für die eigentliche Tronsportaufgabe weitgehend vermeidbar sind.

Erfindungsgemäß wird die Aufgabe der Erfindung durch die Merkmale des Anspruches 1 gelöst. Vorteilhafte Ausgestaltungen ergeben sich aus den Unteransprüchen.

Mit der Erfindung wird ein modulares, mehrteiliges Mehrsystem-Schienenfahrzeug vorgeschlagen, bei dem alle Wagenteile für die Transportaufgabe des Fahrzeugs genutzt werden und bei dem ein zweites Energieversorgungssystem durch Auswechseln eines Wagenteils gegen ein anderes zweites Energieversorgungssystem getauscht werden kann.

Die Vorteile dieses neuen Fahrzeuges liegen einerseits in der Gleichheit von ganzen Wagenteilen und damit geringerem Herstellungs- und Instandhaltungsaufwand bei unterschiedlichen Energiesystemarten, insbesondere Zweisystemarten, andererseits in einer einfachen späteren Umstellung eines Fahrzeuges auf eine andere Mehrsystemart, insbesondere Zweisystemart.

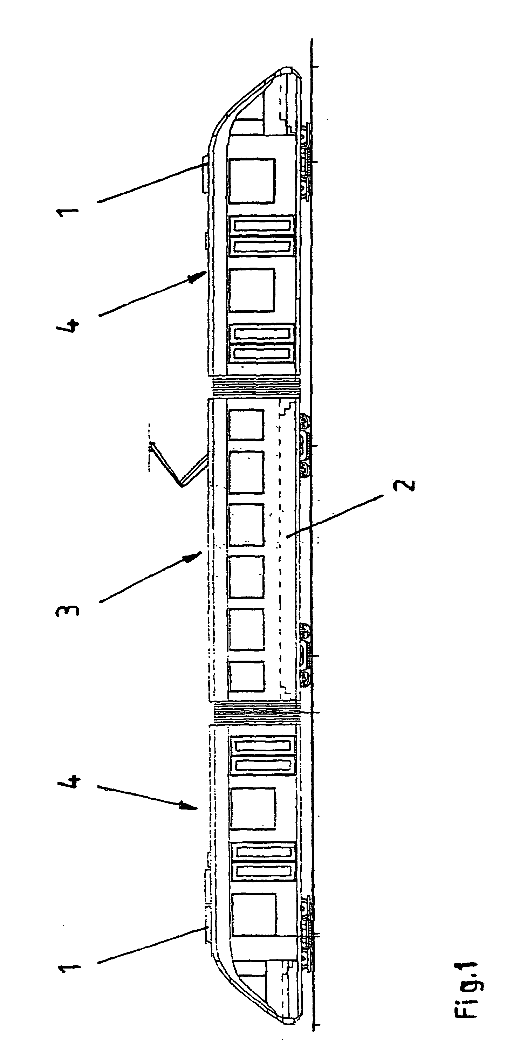

Die Erfindung ist nachfolgend an einem Ausführungsbeispiel mit Bezug auf die Zeichnung näher erläutert. Die zugehörige Zeichnung zeigt in Fig. 1 einen dreiteiligen Gelenktriebwagen mit einem Austauschwagenteil 3 für ein Zweisystem-Schienenfahrzeug in Seitenansicht. Während die Komponenten eines Grundenergieversorgungssystems 1, z.B. 750 V DC (Gleichspannung), in den beiden Endwagen 4, der Ausgangseinheit, untergebracht sind, befindet sich in der Mitte ein Austauschwagenteil 3 für das jeweils erforderliche Zweitsystem 2, z.B. 15 kV-Ausrüstung (Wechselspannung) oder 550 kW-Dieselmotor oder ein anderes Zweitsystem. Beide Endwagenteile 4 mit ihren doppelflügligen Türen können durch die Konzentration des Zweitsystems 2 im Austauschwagenteil 3 mit Niederflurbereichen ausgeführt werden.

Es sind auch Mehrsystem-Fahrzeuge zusammenstellbar, die mehr als ein Austauschwagenteil 3 aufweisen, z. B. eine vierteilige Anordnung mit zwei Endwagen 4 und einem Austauschwagenteil 3 mit 15 kV-Ausrüstung und einem Austauschwagenteil 3 mit Dieselmotor-Ausrüstung.

Alle Wagenteile des Schienenfahrzeuges sind so ausgeführt, daß sie wesentlich für die eigentliche Transportaufgabe des Fahrzeuges nutzbar sind.

Auch sind Austauschwagenteile 3 mit mehr als einem Zweitsystem 2 ausbildbar, d. h. in einem Austauschwagenteil 3 sind zwei Zweitsysteme eingebaut.

## Patentansprüche

1. Modulares, mehrteiliges Mehrsystem-Schienenfahrzeug, insbesondere Zweisystem-Schienenfahrzeug, dessen alle Gliederteile wesentlich für die eigentliche Transportoufgabe nutzbar ausgestottet sind und dessen Komponenten für die Energieversorgungssysteme in den Gliederteilen verteilt angeordnet sind, **dadurch gekennzeichnet, dass** das Schienenfahrzeug mindestens einen Austauschwagenteil (3) mit den Komponenten mindestens eines zweiten Energieversorgungssystems als Zweitsystem (2) aufweist, wobei das jeweils erforderliche Zweitsystem (2) im Austauschwagenteil (3) angeordnet ist, und dass die Komponenten des Grundenergieversorgungssystems (1) in den anderen Gliederteilen der Ausgangseinheit angeordnet sind.

2. Modulares, mehrteiliges Mehrsystem-Schienenfahrzeug, insbesondere Zweisystem-Schienenfahrzeug, nach Anspruch 1, **dadurch gekennzeichnet, dass** das Austauschwagenteil (3) mit einem Zweitsystem (2) den Mittelwagen eines dreiteiligen Schienenfahrzeuges bildet und die Komponenten des Grundenergieversorgungssystems (1) in den Endwagen angeordnet sind.

3. Modulares, mehrteiliges Mehrsystem-Schienenfohrzeug, insbesondere Zweisystem-Schienenfahrzeug, nach Anspruch 1 oder 2, **dadurch gekennzeichnet,** doss mindestens die Endwagen (4) als Niederflurwagen ausgebildet sind.

4. Modulares, mehrteiliges Mehrsystem-Schienenfahrzeug, insbesondere Zweisystem-Schienenfahrzeug, nach Anspruch 1 oder 2, **dadurch gekennzeichnet, dass** das Austauschwagenteil (3) mit mehr als einem Zweitsystem (2) bestückt ist.

5. Modulares, mehrteiliges Mehrsystem-Schienenfahrzeug, insbesondere Zweisystem-Schienenfahrzeug, nach Anspruch 4, **dadurch gekennzeichnet, dass** das Austauschwagenteil (3) mit zwei Zweitsystemen (2) bestückt ist.

6. Modulares, mehrteiliges Mehrsystem-Schienenfahrzeug, insbesondere Zweisystem-Schienenfahrzeug, nach Anspruch 4 oder 5, **dadurch gekennzeichnet, dass** die Austauschwagenteile (3) mit unterschiedlichen Zweitsystemen (2) bestückt sind.

7. Modulares, mehrteiliges Mehrsystem-Schienenfahrzeug, insbesondere Zweisystem-Schienenfahrzeug, noch einem der Ansprüche 1 bis 6, **dadurch gekennzeichnet, dass** der Fahrzeugverbund mehr als ein Austauschwagenteil (3) aufweist.

8. Modulares, mehrteiliges Mehrsystem-Schienenfahrzeug, insbesondere Zweisystem-Schienenfahrzeug, noch Anspruch 7, **dadurch gekennzeichnet, dass** die Austauschwagenteile (3) mit unterschiedlichen Zweitsystemen (2) bestückt sind.

## Claims

1. Modular, multi-part, multi-system rail vehicle, in particular two-system rail vehicle, all the articulated parts of which are essentially equipped so as to be usable for the actual transport function and the components of which for the power supply systems are arranged distributed in the articulated parts, **characterised in that** the rail vehicle exhibits at least one interchangeable wagon part (3) with the components of at least a second power supply system as second system (2), whereby the required second system (2) is arranged in the interchangeable wagon part (3), and **in that** the components of the basic power supply system (1) are arranged in the other articulated parts of the starting unit.

2. Modular, multi-part, multi-system rail vehicle, in particular two-system rail vehicle, according to claim 1, **characterised in that** the interchangeable wagon part (3) with a second system (2) forms the middle wagon of a three-part rail vehicle and the components of the basic power supply system (1) are arranged in the end wagon.

3. Modular, multi-part, multi-system rail vehicle, in particular two-system rail vehicle, according to claim 1 or 2, **characterised in that** at least the end wagons (4) take the form of low-floor wagons.

4. Modular, multi-part, multi-system rail vehicle, in particular two-system rail vehicle, according to claim 1 or 2, **characterised in that** the interchangeable wagon part (3) is fitted with more than one second system (2).

5. Modular, multi-part, multi-system rail vehicle, in particular two-system rail vehicle, according to claim 4, **characterised in that** the interchangeable wagon part (3) is fitted with two second systems (2).

6. Modular, multi-part, multi-system rail vehicle, in particular two-system rail vehicle, according to claim 4 or 5, **characterised in that** the interchangeable wagon parts (3) are fitted with different second systems (2).

7. Modular, multi-part, multi-system rail vehicle, in particular two-system rail vehicle, according to one of claims 1 to 6, **characterised in that** the vehicle set comprises more than one interchangeable wagon part (3).

8. Modular, multi-part, multi-system rail vehicle, in particular two-system rail vehicle, according to claim 7, **characterised in that** the interchangeable wagon parts (3) are fitted with different second systems (2).

## Revendications

1. Véhicule ferroviaire modulaire multicourant en plusieurs parties, en particulier bicourant, dont tous les éléments sont globalement équipés de manière utile pour la fonction de transport proprement dite et dont les composants pour les systèmes d'alimentation en énergie sont répartis dans lesdits éléments, **caractérisé en ce que** le véhicule ferroviaire comporte au moins un élément de voiture interchangeable (3) avec les composants d'au moins un second système d'alimentation en énergie, comme système bicourant (2), le système bicourant (2) nécessaire à chaque fois étant disposé dans cet élément de voiture interchangeable (3), et **en ce que** les composants du système d'alimentation en énergie de base (1) sont disposés dans les autres éléments de l'unité de départ.

2. Véhicule ferroviaire modulaire multicourant en plusieurs parties, en particulier bicourant, selon la revendication 1, **caractérisé en ce que** l'élément de voiture interchangeable (3) pourvu d'un système bicourant (2) forme la voiture centrale d'un véhicule ferroviaire en trois parties, et les composants du système d'alimentation en énergie de base (1) sont disposés dans les voitures d'extrémité.

3. Véhicule ferroviaire modulaire multicourant en plusieurs parties, en particulier bicourant, selon la revendication 1 ou 2, **caractérisé en ce que** les voitures d'extrémité (4), au moins, sont conçues comme des voitures à plate-forme surbaissée.

4. Véhicule ferroviaire modulaire multicourant en plusieurs parties, en particulier bicourant, selon la revendication 1 ou 2, **caractérisé en ce que** l'élément de voiture interchangeable (3) est équipé de plus d'un système bicourant (2).

5. Véhicule ferroviaire modulaire multicourant en plusieurs parties, en particulier bicourant, selon la revendication 4, **caractérisé en ce que** l'élément de voiture interchangeable (3) est équipé de deux systèmes bicourant (2).

6. Véhicule ferroviaire modulaire multicourant en plusieurs parties, en particulier bicourant, selon la revendication 4 ou 5, **caractérisé en ce que** les éléments de voiture interchangeables (3) sont équipés de différents systèmes bicourant (2).

7. Véhicule ferroviaire modulaire multicourant en plusieurs parties, en particulier bicourant, selon l'une des revendications 1 à 6, **caractérisé en ce que** l'ensemble du véhicule comprend plus d'un élément de voiture interchangeable (3).

8. Véhicule ferroviaire modulaire multicourant en plusieurs parties, en particulier bicourant, selon la revendication 7, **caractérisé en ce que** les éléments de voiture interchangeables (3) sont équipés de différents systèmes bicourant (2).
